(19)

Europäisches
Patentamt
European
Patent Office
Office européen
des brevets

(11) **EP 2 338 850 A1**

(12) **EUROPEAN PATENT APPLICATION**

(43) Date of publication:
**29.06.2011 Bulletin 2011/26**

(51) Int Cl.:
*C03C 17/34* (2006.01)     *H01J 9/02* (2006.01)
*H01J 17/49* (2006.01)

(21) Application number: **10154698.4**

(22) Date of filing: **25.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.09.2009 US 246850 P**
**23.02.2010 US 711116**

(71) Applicant: **Samsung SDI Co., Ltd.**
**Gyeonggi-do (KR)**

(72) Inventors:
• **Lee, Jong-Hee**
**Gyeonggi-do (KR)**

• **Joo, Kyu-Nam**
**Gyeonggi-do (KR)**
• **Kim, Jae-Myung**
**Gyeonggi-do (KR)**
• **Kang, Dong-Hyun**
**Gyeonggi-do (KR)**
• **Kim, Young-Su**
**Gyeonggi-do (KR)**

(74) Representative: **Killin, Stephen James**
**Venner Shipley LLP**
**20 Little Britain**
**London EC1A 7DH (GB)**

(54) **Composition for protective layer of plasma display panel, plasma display panel and method of manufacturing same**

(57)     A composition for a protective layer of a plasma display panel, which comprises: (a) a metal oxide powder; (b) a dispersing agent capable of dispersing the metal oxide powder; and (c) an organic solvent having a surface tension of about 20 dyne/cm to 28 dyne/cm and a dielectric constant of about 7 F/m to 36 F/m. Also provided are a plasma display panel comprising a protective layer that has been formed of such a composition and a method of manufacturing the same.

FIG. 1

EP 2 338 850 A1

**Description**

This present invention relates to a composition for a protective layer of a plasma display panel (PDP), and a PDP including the protective layer, and a method of manufacturing the same.

A plasma display panel is a display device that forms an image by exciting phosphor layers with vacuum ultraviolet (VUV) rays generated by gas discharge in discharge cells. As the PDP enables a wide screen with a high resolution, it has been spotlighted as a next generation flat panel display.

A three-electrode surface-discharge type PDP has been widely used. In the three-electrode surface-discharge PDP, display electrodes each including two electrodes are positioned on a front substrate, and address electrodes are positioned on a rear substrate separating from the front substrate with predetermined space. The display electrode is covered with a dielectric layer. The space between the front substrate and the rear substrate is partitioned into a plurality of discharge cells by barrier ribs, and a discharge gas is implanted into the inside of the discharge cells and a phosphor layer is formed toward the rear substrate.

Also, a protective layer is formed over the dielectric layer to reduce the effect of ion impact during discharge. The protective layer may be formed of a composition for a protective layer containing metal oxide powder mixed with a solvent, and what is important is that the metal oxide powder is uniformly distributed in the composition.

Accordingly, in a first aspect of the present invention, there is provided a composition for a protective layer of a plasma display panel comprising: (a) a metal oxide powder; (b) a dispersing agent capable of dispersing the metal oxide powder; and (c) an organic solvent having a surface tension of about 20 dyne/cm to 28 dyne/cm and a dielectric constant of about 7 F/m to 36 F/m.

In a second aspect of the present invention, there is provided a plasma display panel comprising a protective layer that has been formed from a composition according to the present invention in its first aspect.

In a third aspect of the present invention, there is provided the use of a composition according to the present invention in its first aspect to form a protective layer of a plasma display screen.

In a fourth aspect of the present invention, there is provided a method for manufacturing a plasma display panel, comprising applying a composition according to the invention in its first aspect to a dielectric layer of a display panel, and heating the composition to form a protective layer.

Embodiments of the present invention in any of its various aspects are as described below or as defined in the sub-claims.

A more complete appreciation of the present invention, and many of the attendant advantages thereof, will be readily apparent as the same becomes better understood by reference to the following detailed description when considered in conjunction with the accompanying drawings, wherein:

FIGURE 1 is an exploded perspective view showing a plasma display panel according to one embodiment of the present invention.

FIGURE 2 is a photograph showing the dispersion levels of compositions prepared according to Examples 1 to 3 and Comparative Examples 1 and 2 after the compositions stand at room temperature for five days.

Hereinafter, a composition for a protective layer of a plasma display panel (PDP) will be described according to an embodiment of the present invention.

The composition for a protective layer of a plasma display panel may include a metal oxide powder containing a metal selected from the group consisting of Mg, Cu, Ca, Sr, Ba, Zn, Mn, Fe, Al, Ti, Zr, Sn, Ce and combinations thereof, a dispersing agent, and an organic solvent having a surface tension of about 20 dyne/cm to 28 dyne/cm and a dielectric constant of about 7 F/m to 36 F/m..

The metal oxide powder, which is used as a main element of the protective layer of a plasma display panel, may reduce a discharge voltage and protect a dielectric layer from being damaged by sputtering. The metal oxide powder may have a relatively large average particle diameter of at least about 450nm. In an embodiment, the metal oxide powder has an average particle diameter of about 450nm to about 1 $\mu$m.

The dispersing agent may uniformly disperse the metal oxide powder in the solvent. Particularly, the dispersing agent should be able to sufficiently disperse the metal oxide powder with a large particle diameter.

The dispersing agent may be selected from the group consisting of DISPERBYK®-103 (manufactured by BYK chemical company), DISPERBYK® -110 (manufactured by BYK chemical company), DISPERBYK®-182 (manufactured by BYK chemical company), BYKOPLAST®-1000 (manufactured by BYK chemical company) and combinations thereof.

Using the dispersing agent may prevent the metal oxide powder with a large particle diameter from being agglomerated so that the composition should maintain a stable dispersion state.

The organic solvent mixes the metal oxide powder with the dispersing agent, and it may be one selected from the group consisting of nitrile compound, tertiary alkyl acetate, alkylene glycol alkyl ether, dichloromethane, tetrahydrofuran and a combination thereof. In an embodiment, the organic solvent is selected from the group consisting of acetonitrile, dichloromethane, t-butyl acetate, propylene glycol methyl ether, tetrahydrofuran and combinations thereof.

The organic solvent may have a viscosity of lower than about 2.0 mPas (cps) at room temperature and the organic solvent having such a low viscosity can secure fluidity of the metal oxide powder in the solvent, which leads to an increased dispersion.

Also, since the organic solvent is readily volatilized at room temperature, it may prevent the metal oxide powder from being agglomerated and decreasing dispersion to thereby increase a preservative capability at room temperature.

Also, since the organic solvent has a relatively high dielectric constant ranging from about 7 F/m to about 36 F/m, little electrostatic interaction occurs during volatilization, which also prevents the metal oxide powder from being agglomerated. Thus, it is possible not only to form a protective layer of a sufficient thickness but also to secure dispersion characteristics of a solution. Therefore, a uniform protective layer can be formed.

In addition, since the organic solvent has an appropriate level of surface tension ranging from about 20 dyne/cm to 28 dyne/cm, it has excellent adhesion to a lower layer such as a substrate or a dielectric layer and it can prevent the protective layer from coming off the lower layer after drying.

The organic solvent may be included as much as a balance amount calculated by excluding the above mentioned constituent elements from the total amount of the composition.

The metal oxide may be included in an amount of about 0.1 wt% to about 30 wt% based on the amount of the organic solvent. Within the amount range, a high-concentration dense metal oxide layer having excellent dispersion is formed.

The dispersing agent may be included in an amount of about 1 wt% to 7 wt% based on the amount of the metal oxide powder. When the dispersing agent is included within the range, the metal oxide powder may be effectively dispersed while securing dispersion stability at the same time.

<Preparation of Composition for Protective Layer>

[Example 1]

A dispersing agent, 0.8g of DISPERBYK®-182, was added to 100Mℓ of acetonitrile, and dissolved at room temperature by agitating the solution. 20g of magnesium oxide powder having an average particle diameter of 450nm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

[Example 2]

A dispersing agent, 0.8g of DISPERBYK®-182, was added to 100Mℓ of dichloromethane, and dissolved at room temperature by agitating the solution. 20g of magnesium oxide powder having an average particle diameter of 450nm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

[Example 3]

A dispersing agent, 0.8g of DISPERBYK®-182, was added to 100Mℓ of t-butyl acetate, and dissolved at room temperature by agitating the solution. 20g of magnesium oxide powder having an average particle diameter of 450nm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

[Example 4]

A dispersing agent, 0.8g of DISPERBTK®-182, was added to 100Mℓ of propylene glycol methyl ether, and dissolved at room temperature by agitating the solution. 20g of magnesium oxide powder having an average particle diameter of 450nm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

[Example 5]

A dispersing agent, 0.8g of DISPERBYK®-182, was added to 100Mℓ of tetrahydrofuran, and dissolved at room temperature by agitating the solution. 20g of magnesium oxide powder having an average particle diameter of 450nm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

[Example 6]

A dispersing agent, 0.8g of DISPERBYK®-182, was added to 100Mℓ of t-butyl acetate, and dissolved at room temperature by agitating the solution. 20g of magnesium oxide powder having an average particle diameter of 700nm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

[Example 7]

A dispersing agent, 0.8g of DISPERBYK®-182, was added to 100Mℓ of t-butyl acetate, and dissolved at room temperature by agitating the solution. 20g of magnesium oxide powder having an average particle diameter of 1μm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

[Comparative Example 1]

A dispersing agent, 9g of glycerine, was added to 100Mℓ of ethanol, and dissolved at room temperature by agitating the solution. 20g of magnesium oxide powder having an average particle diameter of 450nm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

[Comparative Example 2]

A dispersing agent, 10g of ethylene glycol, was added to 100Mℓ of ethanol, and dissolved at room temperature by agitating the solution. 20g of magnesium oxide powder having an average particle diameter of 450nm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

[Comparative Example 3]

A dispersing agent, 0.8g of DISPERBYK®-182, was added to 100Mℓ of tetrachloromethane (viscosity 0.97 mPas (cps), dielectric constant 2.24 F/m, surface tension 35.2 dyne/cm) and dissolved at room temperature by agitating the solution. 20g of magnesium oxide powder having an average particle diameter of 450nm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

[Comparative Example 4]

A dispersing agent, 0.8g of DISPERBYK®-182, was added to 100Mℓ of chloroform (viscosity 0.58 mPas (cps), dielectric constant 4.81 F/m, surface tension 28.9 dyne/cm) and dissolved at room temperature by agitating the solution. 20g of magnesium oxide powder having an average particle diameter of 450nm was added to the solution to thereby prepare a magnesium oxide dispersion solution. The dispersion solution was placed in an ultrasonic homogenizer to disperse the agglomerated magnesium oxide powder in the solvent for 15 minutes by applying vibration to the solution. The dispersion solution obtained after the ultrasonic homogenization was agitated for 20 minutes with an agitator to thereby prepare a composition.

<Assessment>

The compositions for a protective layer prepared according to Examples 1 to 7 and Comparative Examples 1 to 4 were allowed to stand at room temperature and their variation in the dispersion rate according to the days that the compositions were allowed to stand (which were 1 day, 3 days, 5 days, 7 days and 10 days) were measured. The dispersion rates were measured at room temperature based on the following Equation.

$$\text{dispersion rate } (\%) = \{(\text{height of a turbid layer of a composition in a container}) -$$

$$(\text{height of a precipitation layer of the composition} + \text{height of a transparent layer})\} * 100 \, /$$

$$(\text{height of the turbid layer of the composition in the container})\}$$

When the amount of precipitation is great, the dispersion rate is low, and the less the precipitation amount is, the higher the dispersion rate becomes.
The results were as shown in Table 1.

Table 1

| | Days after being allowed to stand (day) | Dispersion rate (%) | | Days after being allowed to stand (day) | Dispersion rate (%) |
|---|---|---|---|---|---|
| Ex.1 | 1 | 100 | Ex.7 | 1 | 100 |
| | 3 | 100 | | 3 | 100 |
| | 5 | 96 | | 5 | 96 |
| | 7 | 92 | | 7 | 92 |
| | 10 | 85 | | 10 | 87 |
| Ex. 2 | 1 | 100 | Comp. Ex. 1 | 1 | 0 |
| | 3 | 100 | | 3 | 0 |
| | 5 | 100 | | 5 | 0 |
| | 7 | 95 | | 7 | 0 |
| | 10 | 91 | | 10 | 0 |
| Ex. 3 | 1 | 100 | Comp. Ex. 2 | 1 | 0 |
| | 3 | 100 | | 3 | 0 |
| | 5 | 100 | | 5 | 0 |
| | 7 | 100 | | 7 | 0 |
| | 10 | 97 | | 10 | 0 |

(continued)

| | Days after being allowed to stand (day) | Dispersion rate (%) | | Days after being allowed to stand (day) | Dispersion rate (%) |
|---|---|---|---|---|---|
| Ex. 4 | 1 | 100 | Comp. Ex.3 | 1 | 97 |
| | 3 | 94 | | 3 | 91 |
| | 5 | 90 | | 5 | 82 |
| | 7 | 84 | | 7 | 77 |
| | 10 | 81 | | 10 | 70 |
| Ex. 5 | 1 | 100 | Comp. Ex. 4 | 1 | 92 |
| | 3 | 89 | | 3 | 82 |
| | 5 | 85 | | 5 | 78 |
| | 7 | 81 | | 7 | 72 |
| | 10 | 74 | | 10 | 61 |
| Ex. 6 | 1 | 100 | | | |
| | 3 | 100 | | | |
| | 5 | 97 | | | |
| | 7 | 96 | | | |
| | 10 | 94 | | | |

As shown in Table 1, the compositions for a protective layer prepared according to Examples 1 to 7 showed little variation in their dispersion rate as time passed by 1 day, 3 days, 5 days, 7 days and 10 days. The composition prepared according to Example 1 maintained its initial dispersion rate until 3 days after it was allowed to stand, and when 10 days passed, the composition maintained a fine level of dispersion rate, which was about 85%. The composition prepared according to Example 2 maintained its initial dispersion rate until 5 days after it was allowed to stand, and even after 10 days passed, the composition maintained an excellent level of dispersion rate, which was about 91%. The composition prepared according to Example 3 maintained its initial dispersion rate until 7 days after it was allowed to stand, and even after 10 days passed, the composition maintained an excellent level of dispersion rate, which was about 97%. The composition prepared according to Example 4 maintained an excellent level of dispersion rate of about 90% in 5 days after it was allowed to stand, and the composition prepared according to Example 5 maintained an excellent level of dispersion rate of about 85% in 5 days after it was allowed to stand. The composition prepared according to Example 6 maintained an excellent level of dispersion rate of about 94% until 10 days after it was allowed to stand, and the composition prepared according to Example 7 maintained an excellent level of dispersion rate of about 87% in 10 days after it was allowed to stand. Therefore, the metal oxide powder may be effectively dispersed after it is allowed to stand for several days, even though the metal oxide powder having a relatively large average size of about 450nm to $1\mu m$ is used.

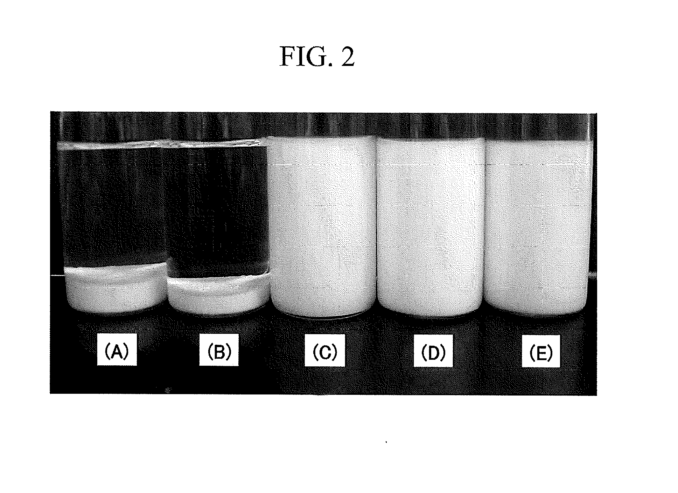

On the contrary, the compositions of Comparative Examples 1 and 2, which used a different solvent and dispersing agent from those of Examples showed bad dispersion rate because the magnesium oxide powder was precipitated within one day after the compositions were allowed to stand at room temperature. Also, the compositions of Comparative Examples 3 and 4 showed bad dispersion rate of about 61 to 70%, which is lower than those of the Examples, in 10 days after it was allowed to stand. FIGURE 2 shows these results.

FIGURE 2 is a photograph showing the extent of dispersion of the compositions prepared according to Examples 1 to 3 and Comparative Examples 1 and 2 after they were allowed to stand at room temperature for five days.

As shown in FIGURE 2, while the compositions of Examples 1 to 3 (referred to as 'C,' 'D' and 'E,' respectively) showed little magnesium oxide powder precipitated and fine extent of dispersion, the compositions of Comparative Examples 1 and 2 (referred to as 'A' and 'B,' respectively) showed most magnesium oxide powder precipitated.

As shown in the above, when the compositions according to Examples of the present invention are used, the magnesium oxide powder is not precipitated even after several days and the dispersion property of the compositions are maintained intact. This indicates that the compositions according to Examples of the present invention have excellent preservative property at room temperature.

Although this patent specification shows such results only for magnesium oxide powder, the same result may be produced for other metal oxide powders, such as a metal oxide power including a metal selected from the group consisting of Cu, Ca, Sr, Ba, Zn, Mn, Fe, Al, Ti, Zr, Sn, Ce and combinations thereof, other than magnesium oxide powder.

Hereafter, a plasma display panel using the above-described composition for a protective layer will be described with reference to the accompanying drawings.

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

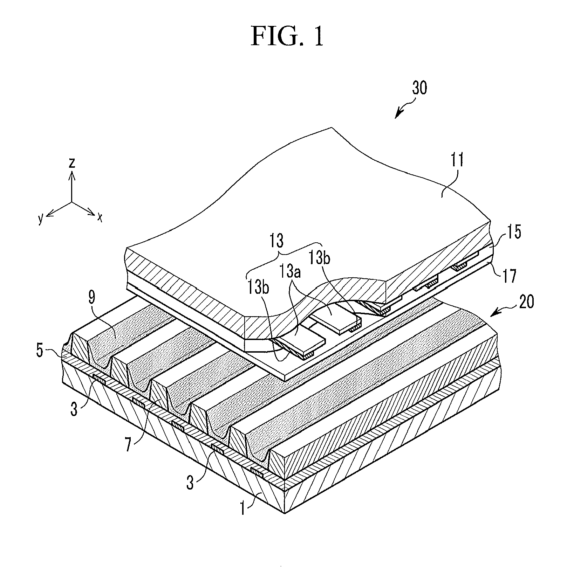

Hereafter, a plasma display panel in accordance with an embodiment of the present invention will be described with reference to FIGURE 1.

FIGURE 1 is an exploded perspective view showing a plasma display panel in accordance with one embodiment of the present invention.

Referring to FIGURE 1, the plasma display panel includes a first display panel 20 and a second display panel 30 which are disposed substantially in parallel to each other with a predetermined distance between them.

The first display panel 20 will be described first.

A plurality of address electrodes 3 are formed on the first substrate 1 in one direction (which is Y-axis direction in the drawing), and a first dielectric layer 5 is formed on the address electrodes 3 to cover the entire surface of the substrate. The first dielectric layer 5 prevents positive ions or electrons from directly colliding the address electrodes 3 during discharge to thereby protect the address electrodes 3 from being damaged, and accumulates wall charges.

A plurality of barrier ribs 7 are formed on the first dielectric layer 5 to be disposed between the address electrodes 3. The barrier ribs 7 are formed to have a predetermined height and they have a shape of stripes partitioning a discharge space. However, the shape and size of the barrier ribs 7 are not limited to this embodiment and the barrier ribs 7 may have closed shapes such as waffle, matrix, and delta, other than open shapes, such as stripes, as long as they can partition the discharge space.

A plurality of discharge cells are formed between the barrier ribs 7, and a phosphor layer 9 which absorbs vacuum ultraviolet (VUV) rays and discharges visible light to display fundamental colors, which are red, green and blue, is formed inside the discharge cells. The inside of the discharge cells are filled with a discharge gas, which is one selected from the group consisting of helium (He), neon (Ne), argon (Ar), xenon (Xe) and a mixed gas thereof, to generate the vacuum ultraviolet (VUV) ray through gas discharge.

Hereafter, the second display panel 30 facing the first display panel 20 will be described.

On one side of the second substrate 11 facing the first substrate 1, a plurality of display electrodes 13 are formed in a direction crossing the address electrodes 3, which is X-axis direction in the drawing. Each display electrode 13 includes a pair of a transparent electrode 13a and a bus electrode 13b which are overlapped with each other.

The transparent electrode 13a causes a surface discharge inside a discharge cell, and it may be formed of a transparent conductor such as ITO or IZO to secure an aperture ratio of the discharge cell. The bus electrode 13b supplies a voltage signal to the transparent electrode 13a and it may be formed of a metal having a low resistance to thereby prevent the resistance from decreasing.

On one side of the display electrodes 13, a second dielectric layer 15 is formed to cover the entire substrate. The second dielectric layer 15 protects the display electrodes 13 from gas discharge while accumulating wall charges during discharge.

The second dielectric layer 15 includes a protective layer 17 formed on one side.

The protective layer 17 may be formed of the composition described above.

Discharge cells are formed at the intersection of the address electrodes 3 and the display electrodes 13. The plasma display panel operates by applying an address voltage (Va) between the address electrodes 3 and the display electrodes 13, thereby performing address discharge, and also by applying a sustain voltage (Vs) between a pair of display electrodes 13, thereby performing sustain discharge. An excitation source generated from the sustain discharge excites a corresponding phosphor layer to thereby emit visible light through the second substrate 11 and thus display an image. The phosphors are usually excited by vacuum ultraviolet (VUV) rays.

Herein, the discharge gas filling the discharge cells may be one selected from the group consisting of helium (He), neon (Ne), argon (Ar), xenon (Xe) and a mixed gas thereof.

According to an embodiment of the present invention described above, a protective layer may be formed of a composition with metal oxide homogeneously dispersed therein, and the protective layer may be formed to have a uniform and sufficient thickness ranging from about 0.5$\mu$m to about 10$\mu$m. Since the metal oxide powder is not agglomerated, no stain is caused, thereby improving the display characteristics.

Hereafter, a method for manufacturing a plasma display panel (PDP) will be described.

A plasma display panel is manufactured by fabricating a first display panel 20 and a second display panel 30 through separate processes, hermetically combining the two display panels 20 and 30 with each other, exhausting internal gas, and implanting a discharge gas thereinto.

Since the first display panel 20 may be fabricated through conventional processes of fabrication, hermetic sealing, exhaustion, and gas implantation, description on the first display panel 20 will not be provided herein.

The fabrication of the second display panel 30 will be briefly described hereafter.

First, a plurality of display electrodes 13 are formed on the substrate 11, and the second dielectric layer 15 is formed on the display electrodes 13. Subsequently, the composition for a protective layer is sprayed on the top of the second dielectric layer 15.

The solvent is dried at a temperature ranging from about 80°C to about 120°C to thereby form a protective layer 17.

While the present invention has been described in connection with certain exemplary embodiments thereof, it is to be understood that the invention is not limited to the disclosed embodiments, but, on the contrary, is intended to cover various modifications and equivalent arrangements included within the spirit and scope of the appended claims.

**Claims**

1. A composition for a protective layer of a plasma display panel comprising:

    (a) a metal oxide powder; (b) a dispersing agent capable of dispersing the metal oxide powder; and (c) an organic solvent having a surface tension of about 20 dyne/cm to 28 dyne/cm and a dielectric constant of about 7 F/m to 36 F/m.

2. A composition as claimed in claim 1, wherein the metal oxide powder contains a metal selected from the group consisting of Mg, Cu, Ca, Sr, Ba, Zn, Mn, Fe, Al, Ti, Zr, Sn, Ce and combinations thereof.

3. A composition as claimed in claims 1 or 2, wherein the metal oxide powder has an average particle diameter of at least about 450 nm.

4. A composition as claimed in claims 1, 2 or 3, wherein the dispersing agent is selected from the group consisting of DISPERBYK®-103, DISPERBYK®-110, DISPERBYK®-182, BYKOPLAST®-1000 and combinations thereof.

5. A composition as claimed in any one of the preceding claims, wherein the organic solvent has a viscosity of less than about 2.0 mPas (cps) at room temperature.

6. A composition as claimed in any one of the preceding claims, wherein the organic solvent is selected from the group consisting of nitrile compounds, tertiary alkyl acetates, alkylene glycol alkyl ethers, dichloromethane, tetrahydrofuran and combinations thereof.

7. A composition as claimed in claim 6, wherein the organic solvent is selected from the group consisting of acetonitrile, dichloromethane, t-butyl acetate, propylene glycol methyl ether, tetrahydrofuran and combinations thereof.

8. A composition as claimed in any one of the preceding claims, wherein the metal oxide is present in an amount of about 0.1 wt% to 30 wt% based on the amount of the organic solvent.

9. A composition as claimed in any one of the preceding claims, wherein the dispersing agent is present in an amount of about 1 wt% to 7 wt% based on the amount of the metal oxide powder.

10. A plasma display panel comprising a protective layer that has been formed from a composition as claimed in any one of claims 1 to 9.

11. Use of a composition as claimed in any one of claims 1 to 9 to form a protective layer of a plasma display screen.

12. A method for manufacturing a plasma display panel, comprising applying a composition as claimed in any one of claims 1 to 9 to a dielectric layer of a display panel, and heating the composition to form a protective layer.

13. A method as claimed in claim 12, wherein the composition is applied by spraying the composition onto the dielectric layer.

**14.** A method as claimed in claim 12 or 13, wherein the composition is heated at a temperature of about 80°C to 120°C to form the protective layer.

# FIG. 1

# FIG. 2

(A)    (B)    (C)    (D)    (E)

Europäisches
Patentamt

European
Patent Office

Office européen
des brevets

# EUROPEAN SEARCH REPORT

Application Number

EP 10 15 4698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/003199 A1 (TAKAYA MINORU [JP] ET AL) 6 January 2005 (2005-01-06) * examples B1-B8,C1-C8,10,11 * | 1-14 | INV. C03C17/34 H01J9/02 H01J17/49 |
| X | EP 1 883 092 A2 (LG ELECTRONICS INC [KR]) 30 January 2008 (2008-01-30) * paragraph [0053] * | 1-14 | |
| X | EP 1 780 749 A2 (LG ELECTRONICS INC [KR]) 2 May 2007 (2007-05-02) * paragraph [0047] * | 1-14 | |
| X | EP 2 056 328 A1 (ASAHI GLASS CO LTD [JP]) 6 May 2009 (2009-05-06) * paragraph [0048] - paragraph [0050] * | 1-14 | |
| X | KR 2007 0023002 A ((DONG-N) DONG JIN SEMICHEM CO LTD) 28 February 2007 (2007-02-28) | 10 | |
| Y | * the whole document * | 1-9, 11-14 | TECHNICAL FIELDS SEARCHED (IPC) |
| X | KR 2007 0023003 A ((DONG-N) DONG JIN SEMICHEM CO LTD) 28 February 2007 (2007-02-28) | 10 | C03C H01J |
| Y | * the whole document * | 1-9, 11-14 | |
| X | KR 2001 0001457 A (SAMSUNG SDI CO LTD [KR]) 5 January 2001 (2001-01-05) | 10 | |
| Y | * the whole document * | 1-9, 11-14 | |
| X | EP 2 047 842 A1 (HAKUTO KK [JP]; KANAGAWA UNIVERSITY [JP]) 15 April 2009 (2009-04-15) * table 1 * | 1-9, 11-14 | |

The present search report has been drawn up for all claims

| Place of search | Date of completion of the search | Examiner |
|---|---|---|
| Munich | 12 May 2011 | Somann, Karsten |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 15 4698

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2011

| Patent document cited in search report | | | Publication date | Patent family member(s) | | | Publication date |
|---|---|---|---|---|---|---|---|
| US 2005003199 | A1 | | 06-01-2005 | EP<br>WO<br>KR<br>US | 1580235<br>2004067631<br>20050093808<br>2008044660 | A1<br>A1<br>A<br>A1 | 28-09-2005<br>12-08-2004<br>23-09-2005<br>21-02-2008 |
| EP 1883092 | A2 | | 30-01-2008 | JP<br>US | 2008034390<br>2008024062 | A<br>A1 | 14-02-2008<br>31-01-2008 |
| EP 1780749 | A2 | | 02-05-2007 | JP<br>US | 2007128891<br>2007096653 | A<br>A1 | 24-05-2007<br>03-05-2007 |
| EP 2056328 | A1 | | 06-05-2009 | WO<br>KR<br>US | 2008023673<br>20090049562<br>2008265774 | A1<br>A<br>A1 | 28-02-2008<br>18-05-2009<br>30-10-2008 |
| KR 20070023002 | A | | 28-02-2007 | NONE | | | |
| KR 20070023003 | A | | 28-02-2007 | NONE | | | |
| KR 20010001457 | A | | 05-01-2001 | NONE | | | |
| EP 2047842 | A1 | | 15-04-2009 | JP<br>WO<br>US | 2008007442<br>2008001757<br>2009324658 | A<br>A1<br>A1 | 17-01-2008<br>03-01-2008<br>31-12-2009 |

EPO FORM P0459